# EUROPÄISCHE PATENTSCHRIFT

(11) **EP 4 147 012 B1**
(45) Veröffentlichungstag und Bekanntmachung des Hinweises auf die Patenterteilung: **26.11.2025**
(21) Anmeldenummer: 21722161.3
(22) Anmeldetag: 23.04.2021
(51) Int. Cl.: G01F 23/263, G01F 1/58, G01F 23/26, G01F 15/14

(54) **MAGNETISCH-INDUKTIVE DURCHFLUSSMESSSONDE UND VERFAHREN ZUM ERMITTELN EINES FÜLLSTANDES**
MAGNETICALLY INDUCTIVE FLOW MEASURING PROBE AND METHOD FOR DETERMINING A FILL LEVEL
SONDE DE MESURE DE DÉBIT À INDUCTION MAGNÉTIQUE ET PROCÉDÉ DE DÉTERMINATION D'UN NIVEAU DE REMPLISSAGE

(30) Priorität: 05.05.2020 DE 102020112151
(43) Veröffentlichungstag der Anmeldung: 15.03.2023
(73) Patentinhaber: Endress+Hauser Flowtec AG, 4153 Reinach (CH)
(72) Erfinder: TSCHUDIN, Beat, 4153 Reinach (CH); BIER, Thomas, 4125 Riehen (CH)
(74) Vertreter: Endress + Hauser Group Services (Deutschland) AG+Co. KG
(86) Internationale Anmeldenummer: PCT/EP2021/060713
(87) Internationale Veröffentlichungsnummer: WO 2021/224035

(56) Entgegenhaltungen:
- EP-A1- 0 892 251
- EP-A1- 0 892 251
- DE-A1- 102012 006 891
- DE-A1- 102012 006 891
- DE-A1- 102018 126 679
- DE-A1- 102018 126 679
- DE-A1- 19 615 140
- DE-A1- 19 615 140

## Beschreibung

Die Erfindung betrifft eine magnetisch-induktive Durchflussmesssonde zum Ermitteln einer strömungsgeschwindigkeitsabhängigen Messgröße eines fließfähigen Mediums in einem Messrohr oder in einer Rohrleitung und ein Verfahren zum Ermitteln eines Füllstandes eines Mediums in einer Rohrleitung.

Eine magnetisch-induktive Durchflussmessvorrichtung umfasst Messgeräte, die basierend auf dem Faraday'schen Gesetz der elektromagnetischen Induktion eine strömungsgeschwindigkeitsabhängige Messgröße eines Mediums relativ zum Messgerät erfassen. Magnetisch-induktive Durchflussmessvorrichtungen umfassen zum Beispiels magnetisch-induktive Durchflussmessgeräte, welche von dem zu überwachenden Medium durchflossen werden und/oder magnetisch-induktive Durchflussmesssonden, welche in Rohrleitungen eingesetzt und vom Medium angeströmt werden.

Magnetisch-induktive Durchflussmessgeräte umfassen ein Messrohr zum Führen eines fließfähigen Mediums und werden zur Bestimmung der Durchflussgeschwindigkeit und des Volumendurchflusses des Mediums in eine Prozessleitung eingesetzt. Ein magnetisch-induktives Durchflussmessgerät weist eine Vorrichtung zum Erzeugen eines Magnetfeldes auf, das ein das Messrohr durchsetzendes Magnetfeld senkrecht zur Flussrichtung des fließenden Mediums erzeugt. Dafür werden üblicherweise einzelne Spulen verwendet, die zusammen eine Spulenanordnung bilden. Um ein überwiegend homogenes Magnetfeld zu realisieren, werden zusätzlich zu den Spulenkerne Polschuhe so geformt und angebracht, dass die Magnetfeldlinien über den gesamten Rohrquerschnitt im Wesentlichen senkrecht zur Querachse bzw. parallel zur Vertikalachse des Messrohres verlaufen. Eine an die Mantelfläche des Messrohres angebrachtes Messelektrodenanordnung greift eine senkrecht zur Flussrichtung und zum Magnetfeld induzierte elektrische Messspannung bzw. Potentialdifferenz ab, die entsteht, wenn ein leitfähiges Medium bei angelegtem Magnetfeld in Flussrichtung fließt. Da die abgegriffene Messspannung laut Faraday'schem Induktionsgesetz von der Geschwindigkeit des fließenden Mediums abhängt, kann aus der induzierten Messspannung U die Durchflussgeschwindigkeit *u* und, mit Hinzunahme eines bekannten Rohrquerschnitts, der Volumendurchfluss *V̇* ermittelt werden.

Im Gegensatz zu einem magnetisch-induktiven Durchflussmessgerät, welches ein Messrohr zum Führen des Mediums mit angebrachter Vorrichtung zum Erzeugen eines das Messrohr durchdringenden Magnetfeldes und Messelektroden umfasst, werden magnetisch-induktive Durchflussmesssonden mit ihrem üblicherweise kreiszylindrischen Gehäuse in eine seitliche Öffnung einer Rohrleitung eingeführt und fluiddicht fixiert. Ein spezielles Messrohr ist nicht mehr notwendig. Die eingangs erwähnte Messelektrodenanordnung und Spulenanordnung auf der Mantelfläche des Messrohrs entfällt, und wird durch ein im Inneren des Gehäuses und in unmittelbarer Nähe zu den Messelektroden angeordnete Vorrichtung zur Erzeugung eines Magnetfeldes ersetzt, welche so ausgestaltet ist, dass eine Symmetrieachse der Magnetfeldlinien des erzeugten Magnetfeldes die Frontfläche bzw. die Fläche zwischen den Messelektroden senkrecht schneidet. Im Stand der Technik gibt es bereits eine Vielzahl an unterschiedlichen magnetisch-induktiven Durchflussmesssonden.

Die EP 0 892 251 A1 beispielsweise lehrt eine magnetisch-induktive Durchflussmesssonde mit einer Frontplatte, welche als Kugelkalotte ausgebildet ist, und einer Spule, die auf einen zylindrischen Spulenkern aufgeschoben ist, welcher als Spulenträger fungiert. Bisher sind noch keine magnetisch-induktive Durchflussmesssonden bekannt, welche dazu ausgebildet sind eine Voll- und/oder Teilbefüllung der Rohrleitung zu erkennen. Eine derartige Funktionalität ist vielmehr bei magnetisch-induktiven Durchflussmessgeräten bekannt.

Die WO 2014/053324 A2 beispielsweise lehrt ein magnetisch-induktives Durchflussmessgerät mit einem Füllstandsüberwachungssystem, welches neben der Unterscheidung zwischen einer Teil- und Vollbefüllung die Ermittlung der Mediumstemperatur mit einer Füllstandselektrode integrierten Temperatursensor erlaubt und sich zugleich durch einen kompakten Aufbau auszeichnet. Für die Überwachung des Füllstandes wird eine Leitfähigkeit des Mediums zwischen der Füllstandsüberwachungselektrode und einer Referenzelektrode oder einer Messelektrode bestimmt. Dafür ist es erforderlich, dass die Füllstandsüberwachungselektrode einen galvanischen Kontakt mit dem zu führenden Medium bildet. Die DE 10 2018 126 679 A1 offenbart ein magnetisch-induktives Durchflussmessgerät, bei der die Füllstandsüberwachung abhängig von der Einbaulage durch die MSÜ-Elektrode oder die Erdungselektrode durchgeführt wird. Nachteilig daran ist, dass dadurch eine zusätzliche Öffnung für die Füllstandsüberwachungselektrode im Messrohr vorzusehen ist und die Füllstandsüberwachungselektrode somit einem eventuell abrasiven und korrosiven Medium schutzlos ausgesetzt ist.

Aus der DE 196 15 140 A1 ist eine Vorrichtung zum Bestimmen eines Füllstandes in einem Messrohr bekannt, welche dazu eingerichtet ist mit zwei an den Außenflächen des Messrohres angebrachten Kondensatorenplatten eine von der Dielektrizitätskonstante des Mediums und der Füllhöhe abhängige Kapazität zu bestimmen und aus der ermittelten Kapazität eine Füllhöhe zu ermittelt.

Die DE 10 2012 006 891 A1 lehrt ein magnetisch-induktives Durchflussmessgerät, welches zusätzlich zur strömungsgeschwindigkeitsabhängigen Messgröße einen Grad der Befüllung ermittelt. Dafür weist es eine zusätzliche Magnetfelderzeugungseinrichtung auf, die ein Magnetfeld erzeugt, dessen Magnetfeldlinien parallel zur Längsachse des Messrohres verlaufen. Die durch das zusätzliche Magnetfeld bedingte Messspannung an den streifenförmigen Messelektroden ist ein Maß für den Füllstand des Mediums.

Der Erfindung liegt die Aufgabe zugrunde, eine alternative magnetisch-induktive Durchflussmessvorrichtung bereitzustellen, die dazu geeignet ist Auskunft über einen Füllstand des Mediums zu geben.

Zudem liegt der Erfindung die Aufgabe zugrunde, ein alternatives Verfahren für eine magnetisch-induktive Durchflussmessvorrichtung bereitzustellen, mit dem ein Füllstand des Mediums ermittelt werden kann.

Die Aufgabe wird gelöst durch die magnetisch-induktive Durchflussmesssonde nach Anspruch 1 und das Verfahren zum Ermitteln eines Füllstandes nach Anspruch 12.

Die erfindungsgemäße magnetisch-induktive Durchflussmesssonde zum Einsetzen in eine von einem Medium durchströmbare Rohrleitung und zum Ermitteln einer strömungsgeschwindigkeitsabhängigen Messgröße eines fließfähigen Mediums in einer Rohrleitung, umfasst:- ein, insbesondere zylindrisches, Gehäuse, welches dazu eingerichtet ist, mit dem Medium beaufschlagt zu werden, wobei das Gehäuse einen Endabschnitt aufweist, der eine zumindest teilweise elektrisch isolierend ausgebildete Wandung umfasst;- mindestens zwei Messelektroden zum Bilden eines galvanischen Kontaktes mit dem Medium, wobei die mindestens zwei Messselektroden in der Wandung des Gehäuses angeordnet sind;- eine Vorrichtung zum Erzeugen eines Magnetfeldes, welche dazu eingerichtet ist, ein den Endabschnitt durchdringendes Magnetfeld zu erzeugen, wobei die Vorrichtung zum Erzeugen des Magnetfeldes im Gehäuse angeordnet ist,
wobei die Vorrichtung eine Feldführungsanordnung und eine Spulenanordnung umfasst,
dadurch gekennzeichnet, dass die Feldführungsanordnung als eine Sensorelektrode zur kapazitiven Bestimmung und/oder Überwachung zumindest einer Prozessgröße, insbesondere eines Füllstandes des Mediums in der Rohrleitung dient.

Die Feldführungsanordnung dient dazu, das durch die Spulenanordnung erzeugte Magnetfeld zu verstärken und zu führen. Sie umfasst mindestens einen Feldführungskörper, wie zum Beispiel einen Spulenkern, welcher in einer Spule der Spulenanordnung angeordnet ist. Zudem werden häufig Polschuhe verwendet, die dazu dienen, dass die Magnetfeldlinien des Magnetfeldes beim Austreten aus dem Spulenkern über eine möglichst große Querschnittsfläche des Messrohres oder der Rohrleitung parallel verlaufen. Zudem sind magnetisch-induktive Durchflussmessvorrichtungen bekannt, in denen Feldrückführungskörper eingesetzt werden, um das erzeugte Magnetfeld wieder kontrolliert zurück zum Spulenkern zu führen. Der Feldführungskörper kann monolithisch oder teilweise monolithisch ausgebildet sein. So ist beispielsweise bekannt, den Spulenkern und den Polschuh einteilig auszubilden, wobei der Teil welcher sich durch eine Öffnung der Spule erstreckt als Spulenkern bezeichnet wird und der Teil, welcher sich zwischen Spule und Gehäusewandung bzw. Messrohrwandung in Richtung des Mediums erstreckt als Polschuh. Die einzelnen Komponenten des Feldführungskörper umfassen in der Regel weichmagnetische Werkstoffe. Erfindungsgemäß ist ein elektrisch leitfähiges Material für den Feldführungskörper zu verwenden.

Es sind kapazitive Füllstandsmessgeräte bekannt, die ausgehend von einer ermittelten Kapazität oder Kapazitätsänderung den Füllstand eines Mediums in einem Behälter ermitteln. Dafür weist ein kapazitives Füllstandmessgerät eine Sensorelektrode auf, die in einem Gehäuse mit einer elektrische isolierenden Wandung angeordnet ist und zusammen mit einer leitenden Gegenelektrode - in der Regel die metallischen Wandung des Behälters - einen elektrischen Kondensator bildet. Es ist zwischen Anwendungen in denen ein elektrisch leitfähiges Medium und Anwendungen in denen ein elektrisch nichtleitfähiges Medium eingesetzt wird zu unterscheiden. Leitfähige Medien, welche im elektrischen Kontakt zur Gegenelektrode stehen nehmen das elektrische Potentials der Gegenelektrode an, so dass sich das elektrische Feld im Wesentlichen in der elektrisch isolierenden Wandung des Gehäuses ausbildet. Befindet sich zwischen der Sensorelektrode und der Gegenelektrode ein nicht-leitendes Medium, so bildet sich das elektrische Feld im Medium aus, wodurch die Dielektrikumskonstante des Mediums einen wesentlichen Einfluss auf die ermittelte Kapazität nimmt.

Auf dem kapazitiven Messprinzip beruhende Messgeräte sind an sich aus dem Stand der Technik bekannt und werden von der Anmelderin in vielen unterschiedlichen Ausgestaltungen hergestellt und beispielsweise unter den Bezeichnungen Liquicap, Solicap oder Liquipoint vertrieben. Kapazitive Messgeräte weisen in der Regel ein im Wesentlichen zylindrisches Gehäuse mit zumindest einer Sensorelektrode auf, welche zumindest teilweise in einen Behälter oder eine Rohrleitung einbringbar ist. Einerseits sind, insbesondere zur kontinuierlichen Füllstandsmessung, vertikal in den Behälter hineinreichende stabförmige Messgeräte weitverbreitet. Zur Erkennung eines Grenzstandes sind jedoch auch in die Seitenwandung eines jeweiligen Behälters einbringbare Messgeräte bekannt geworden.

Die vorliegende Feldführungsanordnung weist einen Feldführungskörper auf, der elektrisch leitfähig ist. Dies erlaubt es die Feldführungsanordnung zu zweckentfremden und als eine Sensorelektrode einzurichten, die eine Messkapazität ermittelt, anhand der Aussagen über den Füllstand des Mediums in der Rohrleitung oder im Messrohr gemacht werden können. Dabei übernimmt das Medium entweder die Rolle der Gegenelektrode oder des Dielektrikums.

Die vorliegende Erfindung eignet sich zur kontinuierlichen Überwachung und/oder Bestimmung des Füllstandes, welche eine Ermittlung der vorliegenden Füllhöhe umfasst, oder zur Bestimmung ob ein bzw. welcher binärer Zustand - Vollbefüllung oder Teilbefüllung - vorliegt.

Für die Bestimmung eines Volumendurchflusses wird die ermittelte Strömungsgeschwindigkeit mit der Querschnittsfläche des Messrohres oder der Rohrleitung multipliziert. Dies gilt jedoch nur, wenn das Messrohr vollgefüllt ist. Es ist daher vorteilhaft, wenn die magnetisch-induktive Durchflussmessvorrichtung zusätzlich dazu ausgebildet ist, eine Aussage zu treffen, ob eine Teilbefüllung bzw. Vollbefüllung vorliegt oder nicht.

Feldgeräte in Form von Multisensoren sind bereits bekannt. So gibt es Messgeräte, welche sowohl in einem kapazitiven als auch einem konduktiven Betriebsmodus arbeiten können. Beispiele dafür werden in den Dokumenten DE 10 2011 004 807 A1, DE 10 2013 102 055 A1 oder DE 10 2014 107 927 A1 offenbart. Neben der Prozessgröße Füllstand lassen sich mittels eines derartigen Multisensors verschiedene medienspezifische Eigenschaften, wie die elektrische Leitfähigkeit des Mediums, oder auch dielektrische Eigenschaften des Mediums, wie beispielsweise dessen Dielektrizitätskonstante, bestimmen, wie in der DE 10 2013 104 781 A1 beschrieben. Derartige Messgeräte unterscheiden sich vom Gegenstand der vorliegenden Erfindung insbesondere darin, dass die Messelektroden zur Bestimmung einer Leitfähigkeit des Mediums eingesetzt werden und nicht wie erfindungsgemäß zum Ermitteln einer induzierten Messspannung. Zudem weisen derartige Messgeräte keine Vorrichtung zum Erzeugen eines Magnetfeldes auf, was für die Bestimmung einer strömungsgeschwindigkeitsabhängigen Messgröße basierend auf dem Faraday'schen Gesetz der elektromagnetischen Induktion unabdingbar ist.

Die strömungsgeschwindigkeitsabhängige Messgröße umfasst eine Durchflussgeschwindigkeit, einen Volumendurchfluss und/oder einen Massedurchfluss.

Vorteilhafte Ausgestaltung der Erfindung sind Gegenstand der Unteransprüche.
Eine Ausgestaltung sieht vor, dass eine insbesondere im Gehäuse angeordnete Betriebsschaltung mit der Feldführungsanordnung insbesondere elektrisch verbunden ist,
wobei die Betriebsschaltung dazu eingerichtet ist, die Feldführungsanordnung mit einem insbesondere zeitlich alternierenden Erregersignal zu beaufschlagen, von der Feldführungsanordnung ein Antwortsignal zu empfangen und zumindest aus dem Antwortsignal eine Aussage über den Füllstand des Mediums in der Rohrleitung oder dem Messrohr zu treffen.

Während des Messbetriebs wird die Sensorelektrode mit einem Erregersignal, in der Regel in Form eines Wechselstromsignals oder eines Wechselspannungssignals, beaufschlagt. Dieses wird durch die Betriebsschaltung bereitgestellt. Aus dem von der Sensorelektrode oder einer weiteren dazu ausgebildeten und eingerichteten Sensorelektrode empfangenen Antwortsignal kann anschließend die jeweilige Prozessgröße - d.h. der vorliegende Füllstand oder ob eine Vollbefüllung vorliegt - bestimmt werden. Gemäß dem kapazitiven Messprinzip wird die Abhängigkeit des Antwortsignals von der Kapazität des von der Sensorelektrode und der Wandung des Behälters, oder des von der Sensorelektrode und einer zweiten Elektrode gebildeten Kondensators ausgenutzt. Je nach Leitfähigkeit des Mediums bildet entweder das Medium selbst oder eine Isolierung der Sensorelektrode das Dielektrikum dieses Kondensators.

Zur Auswertung des von der Sensorelektrode empfangenen Antwortsignals in Bezug auf den Füllstand kann dann beispielsweise entweder eine Scheinstrommessung oder auch eine Admittanzmessung durchgeführt werden. Bei einer Scheinstrommessung wird der Betrag des an der Sensorelektrode ermittelten Scheinstroms gemessen. Da der Scheinstrom jedoch an sich einen Wirk- und einem Blindanteil aufweist, wird im Falle einer Admittanzmessung neben dem Scheinstrom der Phasenwinkel zwischen dem Scheinstrom und der an der Sensoreinheit anliegenden Spannung gemessen. Eine weitere Möglichkeit für die Ermittlung eines Füllstandes besteht darin eine Frequenzverschiebung zwischen dem Referenzsignal und Antwortsignal zu ermitteln, wobei das Referenzsignal in einem - bspw. werkseitigen - Justierverfahren ermittelt wird.

Die zusätzliche Bestimmung des Phasenwinkels erlaubt es darüber hinaus Aussagen über eine mögliche Ansatzbildung zu treffen, wie beispielsweise aus der DE102004008125A1 bekannt geworden ist.

Die Betriebsschaltung ist für die Signaleinspeisung, -erfassung und
-auswertung verantwortlich und dementsprechend ausgebildet. Sie kann so konfiguriert werden, dass sie bestimmte Operationen ausführt, die eine Kontrollstruktur umfassen, um ein Erregersignal bereitzustellen und ein Antwortsignal zu ermitteln. In bestimmten Ausführungsformen bildet die Betriebsschaltung einen Teil eines Verarbeitungs-Subsystems, das eine oder mehrere Rechenvorrichtungen mit Speicher-, Verarbeitungs- und/oder Kommunikationshardware umfasst. Die Betriebsschaltung kann eine einzelne Einheit oder ein mehrteilige Einheit sein, welche Teile miteinander kommunizieren. Die Funktionen der Betriebsschaltung können durch Hardware und/oder Software ausgeführt werden. Die Betriebsschaltung kann eine oder mehrere arithmetisch-logische Einheiten (ALUs), zentrale Verarbeitungseinheiten (CPUs), Speicher, Begrenzer, Konditionierer, Filter, Oszillatoren, Formatkonverter oder ähnliches enthalten, die aus Gründen der Übersichtlichkeit nicht dargestellt werden. In einer Form ist die Betriebsschaltung so programmierbar, dass er Algorithmen ausführt und Daten gemäß der Betriebslogik verarbeitet, die durch Programmieranweisungen, wie Software oder Firmware, definiert ist. Alternativ oder zusätzlich kann die Betriebslogik für die Betriebsschaltung zumindest teilweise durch festverdrahtete Logik oder andere Hardware definiert werden, z.B. durch eine anwendungsspezifische integrierte Schaltung (ASIC) eines beliebigen geeigneten Typs. Es ist zu berücksichtigen, dass die Betriebsschaltung ausschließlich für das Erzeugen des Erregersignales und das Bestimmen des Antwortsignales bestimmt sein kann oder weiter bei der Regelung, Steuerung und Aktivierung eines oder mehrerer anderer Subsysteme oder Aspekte der magnetisch-induktiven Durchflussmessvorrichtung verwendet werden kann.

Das Gehäuse der magnetisch-induktiven Durchflussmesssonde weist ein Gehäuse auf, welches dazu eingerichtet und geeignet ist mit dem zu führenden Medium beaufschlagt zu werden. Das heißt, dass das Gehäuse im Betrieb - anders als magnetisch-induktive Durchflussmessgeräte - mediumsberührend ist.

Üblicherweise weist das in der Regel zylindrische Gehäuse der magnetisch-induktiven Durchflussmesssonde einen Hohlraum auf, in dem die Vorrichtung zum Erzeugen des Magnetfeldes, die elektrischen Leiter und anwendungsbedingt auch die Betriebs-, Mess- und/oder Auswerteschaltung angeordnet sind. Das Gehäuse kann auch als Vergusskörper ausgebildet bzw. vollvergossen sein, wobei die elektrischen Leiter, die mindestens eine Messelektrode und die Vorrichtung zum Erzeugen des Magnetfeldes mitvergossen sind. Das Gehäuse ist üblicherweise zumindest teilweise zylindrisch oder hohlzylindrisch ausgebildet, es kann aber auch anwendungsbedingt teilweise quaderförmig sein. Die mediumsberührende Ummantelung des Gehäuses ist üblicherweise leitfähig ausgebildet, beispielsweise aus Metall gefertigt oder metallisiert, und dient als Bezugselektrode. Es sind jedoch auch magnetisch-induktive Durchflussmesssonden bekannt, bei denen die Bezugselektrode als Ringelektrode ausgebildet oder wo das zu führende Medium über einen Anschlusskörper mit einem Bezugspotential verbunden ist.

Das Gehäuse ist gemäß einer vorteilhaften Ausgestaltung an der mediumsberührenden Stirnseite mit einem Frontkörper versehen, welcher den Hohlraum des Gehäuses abschließt. Der Frontkörper ist vorzugsweise zumindest teilweise scheibenförmig ausgebildet. Der Frontkörper dichtet das Gehäuseinnere gegen das fließende Medium in der Rohrleitung ab. Die mindestens eine Messelektrode ist im Frontkörper angeordnet.

Die magnetisch-induktive Durchflussmesssonde ist so in die Öffnung eines Rohres einzuführen, dass der Frontabschnitt des Gehäuses mit dem zu führenden Medium in unmittelbaren Kontakt steht.

Für das Erfassen einer strömungsgeschwindigkeitsabhängigen, in dem Medium induzierten Messgröße wird eine Messelektrodenanordnung, insbesondere mindestens eine Messelektrode in Kombination mit einer Referenzelektrode benötigt, die mit einem Referenzpotential, insbesondere einem Erdpotential elektrisch verbunden ist. Die Referenzelektrode kann beispielsweise als Stiftelektrode, als Ringelektrode oder auch durch ein teilweise metallisch ausgebildetes Gehäuse realisiert sein, welches mit einem Referenzpotential, z.B. einer Erdung verbunden ist. Handelsübliche magnetisch-induktive Durchflussmesssonden weisen jedoch zwei Messelektroden auf, welche auf einer Messelektrodenachse angeordnet und an der mediumsberührenden Stirnfläche des Frontkörpers angeordnet sind, wobei die magnetisch-induktive Durchflussmesssonde so in die Öffnung eines Rohres anzuordnen ist, dass die Messelektrodenachse vorzugsweise senkrecht zur Fließrichtung des Mediums verläuft.

Eine Messelektrodenanordnung, bestehend aus mindestens zwei Messelektroden, kann für die Herstellung der magnetisch-induktiven Durchflussmesssonde bereits vorkonfektioniert sein, d.h. die mindestens zwei Messelektroden sind über einen Verbindungskörper miteinander verbunden. Eine derartige Messelektrodenanordnung wird dann in das Werkzeug einer Spritzgussanlage eingelegt und mit dem Frontkörper mitvergossen. Alternativ können durchgängige Löcher im Frontkörper vorgesehen werden, in welche die Messelektroden, die üblicherweise als Spitzelektrode ausgebildet sind, eingepresst werden. Es sind magnetisch-induktive Durchflussmesssonden bekannt mit mehr als drei Messelektroden.

Eine Ausgestaltung sieht vor, dass der Feldführungsanordnung einen Spulenkern, einen Polschuh und/oder einen Feldrückführungskörper umfasst.

Die Spulenanordnung kann genau ein Spule oder mehrere Spulen umfassen. Eine Spule umfasst üblicherweise einen Spulenanordnungsträger mit einer Öffnung und mindestens einen, um den Spulenanordnungsträger gewickelten Spulendraht. Die Öffnung im Spulenanordnungsträger ist vorzugsweise so ausgebildet, dass ein Feldführungskörper, beispielsweise in Form eines Spulenkerns und/oder eines Feldrückführungskörpers, formschlüssig einsetzbar ist. Die erfindungsgemäße magnetisch-induktive Durchflussmesssonde umfasst vorzugsweise genau eine Spule.

Der Polschuh kann durch ein separates Bauteil gebildet, oder Teil des Spulenkerns sein. Im zweiten Fall ist der Abschnitt des Spulenkerns als Polschuh zu interpretieren, welcher zwischen Spule bzw. Spulenkern und Spule und Frontabschnitt der magnetisch-induktiven Durchflussmesssonde angeordnet ist.

Herkömmliche Spulenkerne sind vollzylindrisch ausgebildet. Erfindungsgemäß kann der Spulenkern vollzylindrisch oder aus mindestens einem Blechteil gebildet sein.

Der Feldrückführungskörper dient dazu das aus dem Spulenkern und/oder Polschuh austretende Magnetfeld kontrolliert zurückzuführen. Dafür ist es mit einem Ende des Spulenkerns verbunden. Es sind Feldrückführungskörper bekannt, welche hohlzylindrisch ausgebildet sind. Erfindungsgemäß kann der Feldrückführungskörper hohlzylindrisch oder als ein Blechteil, insbesondere als Teil des den Spulenkern bildenden mindestens einen Blechteil ausgebildet sein.

Ist die Betriebsschaltung elektrisch mit dem Feldführungskörper verbunden, so bildet sich im Betrieb eine Kapazität zwischen dem Feldführungskörper und dem leitfähigen Medium aus. Diese Kapazität hängt vom Füllstand des Mediums in der Rohrleitung ab. Erfindungsgemäß wird anhand der ermittelten Messkapazität ein Füllstand ermittelt, insbesondere ob eine Teil- oder Vollbefüllung vorliegt.

Ist die Betriebsschaltung elektrisch mit dem Spulenkern verbunden, so bildet sich im Betrieb eine Kapazität zwischen dem Spulenkern und dem leitfähigen Medium aus. Diese Kapazität hängt vom Füllstand des Mediums in der Rohrleitung ab. Erfindungsgemäß wird anhand der ermittelten Messkapazität ein Füllstand ermittelt, insbesondere ob eine Teil- oder Vollbefüllung vorliegt.

Ist die Betriebsschaltung elektrisch mit dem Polschuh verbunden, so bildet sich im Betrieb eine Kapazität zwischen dem Polschuh und dem leitfähigen Medium aus. Diese Kapazität hängt vom Füllstand des Mediums in der Rohrleitung ab. Erfindungsgemäß wird anhand der ermittelten Messkapazität ein Füllstand ermittelt, insbesondere ob eine Teil- oder Vollbefükkung vorliegt.

Stehen die einzelnen Komponenten der Feldführungsanordnung in einem elektrischen Kontakt, so bildet sich eine elektrische Kapazität zwischen der gesamten Feldführungsanordnung und dem leitfähigen Medium aus, welche eine Maß für einen Füllstand des Mediums in der Rohrleitung bildet.
Eine Ausgestaltung sieht vor, dass die magnetisch-induktive Durchflussmesssonde eine um die Wandung des Gehäuses herum angeordnete ringförmige Elektrode umfasst,
wobei die Betriebsschaltung dazu eingerichtet ist, das Erregersignal am Feldführungskörper in Bezug auf die ringförmige Elektrode aufzuprägen.

Die Betriebsschaltung vorteilhafterweise dazu eingerichtet das Antwortsignal in Bezug auf die Bezugselektrode an dem Feldführungskörper zu ermitteln.

Die Elektrode kann durch ein hohlzylindrisches metallisches Gehäuse gebildet sein oder als eine separate Elektrode an der Außenfläche des Gehäuses vorgesehen sein.
Eine Ausgestaltung sieht vor, dass die magnetisch-induktive Durchflussmesssonde dazu geeignet ist über einen metallischen Anschlusskörper in einer insbesondere metallischen Rohrleitung befestigt zu werden,
wobei die magnetisch-induktive Durchflussmesssonde derart ausgebildet ist, dass sich beim Anschließen der magnetisch-induktiven Durchflussmesssonde an den Anschlusskörper ein elektrischer Kontakt zwischen Betriebsschaltung und Anschlusskörper bildet,
wobei die Betriebsschaltung dazu eingerichtet ist, das Erregersignal an dem Feldführungskörper in Bezug auf den Anschlusskörper aufzuprägen.
Eine Ausgestaltung sieht vor, dass das Feldsystem einen Feldrückführungskörper aufweist, welcher mit einem Endabschnitt des Spulenkerns verbunden ist.
Eine Ausgestaltung sieht vor, dass zumindest ein Teilabschnitt des Feldführungskörpers die elektrisch isolierende Wandung des Gehäuses berührt.
Eine Ausgestaltung sieht vor, dass die Wandung des Gehäuses eine mit dem Medium beaufschlagbare Außenfläche aufweist,
wobei ein Ausschnitt des Feldführungsanordnung ausschließlich durch die Wandung des Gehäuses von der Außenfläche beabstandet ist.

Der als Sensorelektrode dienende Feldführungskörper ist idealerweise ausschließlich durch die Wandung des Gehäuses vom Medium getrennt. In dem Fall hängt die sich zwischen Feldführungskörper und Medium ausbildende elektrische Kapazität im Wesentlichen von der Dielektrizitätskonstante des Materials der Wandung, der Wandstärke und der durch das Medium benetzten Kontaktfläche zwischen Medium und Gehäuse ab. Ändert sich der Füllstand und somit die Größe der Kontaktfläche so kann anhand der ermittelbaren Messkapazität ein Füllstand bzw. das Vorliegen einer Vollbefüllung oder Teilbefüllung ermittelt werden.
Eine Ausgestaltung sieht vor, dass die Betriebsschaltung mit der Spulenanordnung verbunden ist und dazu eingerichtet ist ein getaktetes Magnetfeld mit Anregungsphasen und mit sich jeweils zwischen zwei Anregungsphasen befindliche Ruhephasen, in denen im Wesentlichen kein Spulenstrom fließt zu erzeugen,
wobei in einer der Ruhephasen das Erregersignal erzeugt und das entsprechende Antwortsignal empfangen wird.

Um ein Verschieben des Nullpunktes zu vermeiden wird in den meisten Fällen ein getaktetes Magnetfeld mit alternierender Magnetfeldrichtung über die Spulenanordnung erzeugt. In den Phasen der Anregungsphase, in denen der Spulenstrom an der Spulenanordnung im Wesentlichen konstant ist wird die induzierte Messspannung ermittelt und für die Ermittlung der strömungsgeschwindigkeitsabhängigen, induzierten Messspannung verwendet. Gemäß der vorteilhaften Ausgestaltung sind zwischen einzelnen Anregungsphasen Ruhephasen vorgesehen sein, in denen der Spulenstrom und somit auch das erzeugte Magnetfeld Null sind. In diesen Ruhephasen wird das Erregersignal an die Sensorelektrode aufgeprägt und ein Antwortsignal ermittelt. Somit wird sichergestellt, dass weder die induzierte Messspannung Einfluss auf das Antwortsignal nimmt noch, dass das erzeugte Erregersignal Einfluss auf die gemessene induzierte Spannung nimmt.
Eine Ausgestaltung sieht vor, dass die Betriebsschaltung dazu eingerichtet ist, einen Messwert einer elektrischen Kapazität der Feldführungsanordnung zum Medium zumindest anhand des Antwortsignales zu bestimmen und anhand einer Abweichung der ermittelten Messwerte von einer Referenzkapazität eine Information bezüglich des Füllstandes zu ermitteln.

Die Ermittlung der Information bezüglich des Füllstandes umfasst im einfachsten Fall, das Vorliegen einer Vollbefüllung oder einer Teilbefüllung. In einem Justierverfahren oder Kalibrierverfahren wird der magnetisch-induktiven Durchflussmesssonde eine Referenzkapazität zugeordnet, welche für eine Vollbefüllung oder Teilbefüllung des Mediums in der Rohrleitung steht. Weicht die ermittelte Messkapazität von der Referenzkapazität ab, so kann dies dem Betreiber signalisiert werden oder einer Auswerteeinheit übermittelt werden, welche die Änderung des Füllstandes bei der Berechnung des Volumenflusses berücksichtigt.

Ein erfindungsgemäßes Verfahren zum Ermitteln eines Füllstandes in einer Rohrleitung mit der erfindungsgemäßen magnetisch-induktiven Durchflussmesssonde umfasst die Verfahrensschritte:
- Beaufschlagen eines Feldführungskörpers mit einem elektrischen, insbesondere zeitlich alternierenden Erregersignal,
- Empfangen eines elektrischen Empfangssignals von dem Feldführungskörper,
- Ermitteln einer Messkapazität des Feldführungskörpers zumindest anhand des Empfangssignals, und
- Bestimmen eines Füllstandes in der Rohrleitung anhand der Messkapazität.

Die Erfindung wird anhand der nachfolgenden Figuren näher erläutert. Es zeigt:
Fig. 1: eine perspektivische Teilschnittabbildung einer magnetisch-induktiven Durchflussmesssonde nach dem Stand der Technik;
Fig. 2: einen Längsschnitt durch eine Ausgestaltung der erfindungsgemäßen magnetisch-induktiven Durchflussmesssonde eingesetzt in einer Rohrleitung;
Fig. 3: drei Ansichten auf eine Ausgestaltung der erfindungsgemäßen magnetisch-induktiven Durchflussmesssonde; und
Fig. 4: einen erfindungsgemäßen Verfahrensablauf zum Ermitteln eines Füllstandes eines Mediums in einem Messrohr oder in einer Rohrleitung mit einer magnetisch-induktiven Durchflussmessvorrichtung.

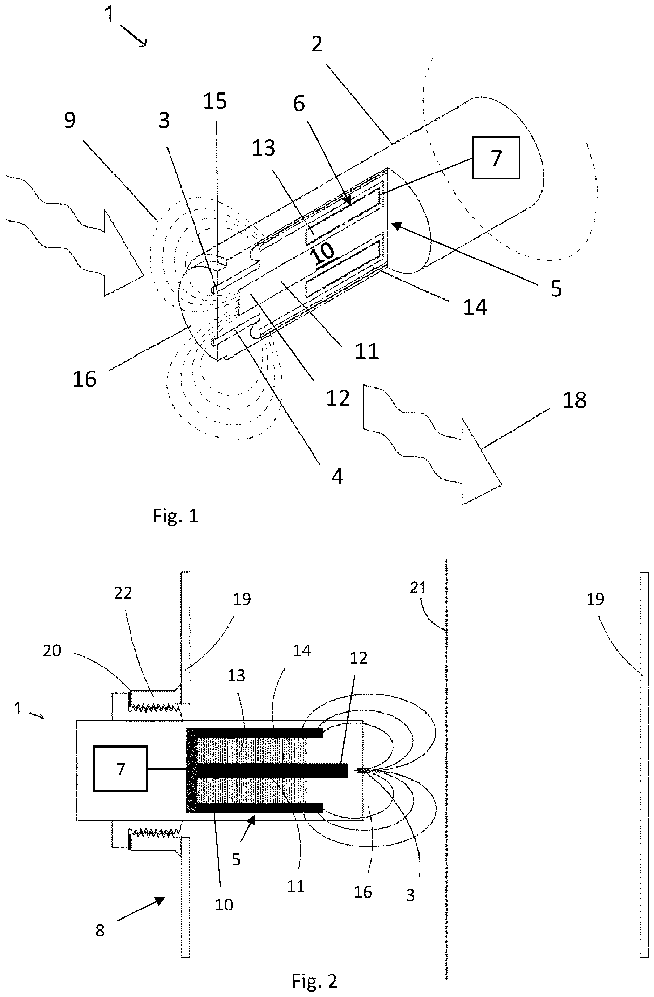

Anhand der perspektivischen und teilweise geschnittenen Darstellung der Fig. 1 wird zunächst das der Erfindung zugrunde liegende Messprinzip erläutert. Eine Durchflussmesssonde 1 umfasst ein im allgemeinen kreiszylindrisches, einen vorgegebenen Außendurchmesser aufweisendes Gehäuse 2. Dieses ist an den Durchmesser einer Bohrung angepasst, die sich in einer Wand einer in Fig. 1 nicht, dagegen in Fig. 2 dargestellten Rohrleitung 8 befindet und in die die Durchflussmesssonde 1 fluiddicht eingesteckt ist. In der Rohrleitung 8 strömt ein zu messendes Medium, in das die Durchflussmesssonde 1 praktisch senkrecht zur Strömungsrichtung des Mediums eintaucht, die durch die gewellten Pfeile 18 angedeutet ist. Ein in das Medium ragendes Frontende 16 des Gehäuses 2 ist mit einem Frontkörper 15 aus Isoliermaterial fluiddicht verschlossen. Mittels einer im Gehäuse 2 angeordneten Spulenanordnung 6 lässt sich ein durch den Endabschnitt hindurch, in das Medium hineinreichendes Magnetfeld 9 erzeugen. Ein mindestens teilweise aus einem weichmagnetischen Material bestehender, im Gehäuse 2 angeordneter Spulenkern 11 endet an oder in der Nähe des Endabschnittes 16. Ein Feldrückführungskörper 14, der die Spulenanordnung 6 und den Spulenkern 11 umschließt, ist dazu eingerichtet das aus dem Endabschnitt hindurchreichende Magnetfeld 9 in das Gehäuse 2 zurückzuführen. Der Spulenkern 11, der Polschuh 12 und der Feldrückführungskörper 14 sind jeweils Feldführungskörper 10, welche zusammen eine Feldführungsanordnung 5 bilden. Eine erste und eine zweite galvanische Messelektrode 3, 4 sind in dem Frontkörper 15 angeordnet und berühren das Medium. An den Messelektroden 3, 4 lässt sich eine aufgrund des Faraday'schen Induktionsgesetzes induzierte elektrische Spannung mittels einer Mess- und/oder Auswerteeinheit abgreifen. Diese ist maximal, wenn die Durchflussmesssonde so in die Rohrleitung eingebaut ist, dass eine durch eine die beiden Messelektroden 3, 4 schneidende Gerade und eine Längsachse der Durchflussmesssonde aufgespannte Ebene senkrecht zu der Strömungsrichtung 18 bzw. Längsachse der Rohrleitung verläuft. Eine Betriebsschaltung 7 ist mit der Spulenanordnung 6, insbesondere mit der Spule 13 elektrisch verbunden und dazu eingerichtet ein getaktetes Anregungssignal auf die Spule aufzuprägen um somit ein getaktetes Magnetfeld 9 zu erzeugen.

Die Fig. 2 stellt ein in eine Rohrleitung 8 eingebaute magnetisch-induktive Durchflussmesssonde 1 im Längsschnitt dar. Die Durchflussmesssonde 1 ist mittels einer Einschraubverbindung 22, die in die Rohrwandung 19 der Rohrleitung 8 eingesetzt und mit ihr z.B. verschweißt ist, in der Rohrleitung 8 fluiddicht befestigt. Dieser Aufbau der Messstelle ist besonders zweckmäßig, da zunächst die Einschraubverbindung 22 in die Rohrleitung 8 eingesetzt und darin eingeschweißt werden kann und erst danach die magnetisch-induktive Durchflussmesssonde 1 in den Einschraubverbindung 22 mit einem Anschlusskörper 20 eingesteckt, ihrerseits darin eingeschraubt und mittels einer Dichtung abgedichtet zu werden braucht. Dadurch entsteht einbaubedingt ein unbekannter Einbauwinkel zwischen der Rohrlängsachse und der Elektrodenachse. Die zwei Messelektrode 3, 4 sind auf dem Endabschnitt 16 symmetrisch zu einem Zentrum des Endabschnittes 16 angeordnet. Der Spulenkern 11 ist vollzylindrisch ausgebildet und koaxial zum Gehäuse orientiert. Der Feldrückführungskörper 14 ist hohlzylindrisch ausgebildet und steht mit einem Ende des Spulenkerns 11 im Kontakt. Der Spulenkern 11, Polschuh 12 und Feldführungskörper 14 sind monolithisch ausgebildet. Eine Einbautiefe D gibt an, wie tief die Durchflussmesssonde 1 in das Medium eingeführt ist bzw. in die Rohrleitung hineinragt.

Erfindungsgemäß ist die Betriebsschaltung 7 mit der Feldführungsanordnung 5, insbesondere mit einem Feldführungskörper 10 der Feldführungsanordnung 5 verbunden. In der abgebildeten Ausgestaltung ist die Feldführungsanordnung 5 durch einen Spulenkern 11, einem Polschuh 12 und einem Feldführungskörper 14 einstückig gebildet. Die Betriebsschaltung 7 ist dazu ausgebildet ein insbesondere zeitlich alternierenden Erregersignal zu erzeugen und die Feldführungsanordnung 5 bzw. den Feldführungskörper 14 damit zu beaufschlagen. Zudem ist die Betriebsschaltung 7 dazu eingerichtet ein Antwortsignal an der Feldführungsanordnung 5 bzw. dem Feldführungskörper 14 abzugreifen und zumindest in Abhängigkeit des Antwortsignales eine Aussage über den Füllstand des Mediums in der Rohrleitung zu machen. Das Erregersignal und das Antwortsignal weisen jeweils eine Amplitude und eine Frequenz auf. Anhand einer Amplitudendifferenz kann eine Aussage über den Füllstand gemacht werden. Alternativ kann die Betriebsschaltung dazu eingerichtet sein, einen Phasenunterschied oder eine von dem Phasenunterschied abhängige Größe der beiden Signale zu ermitteln und daraus eine Aussage aus dem Füllstand zu machen. Alternativ kann die Betriebsschaltung dazu eingerichtet sein, anhand der Frequenz des Antwortsignales den Füllstand zu ermitteln. Alternativ kann unter Berücksichtigung des Erregersignals, des Antwortsignales und einem Ersatzschaltbild eine Messkapazität ermittelt werden, anhand der Rückschlüsse zum Füllstand gemacht werden können.

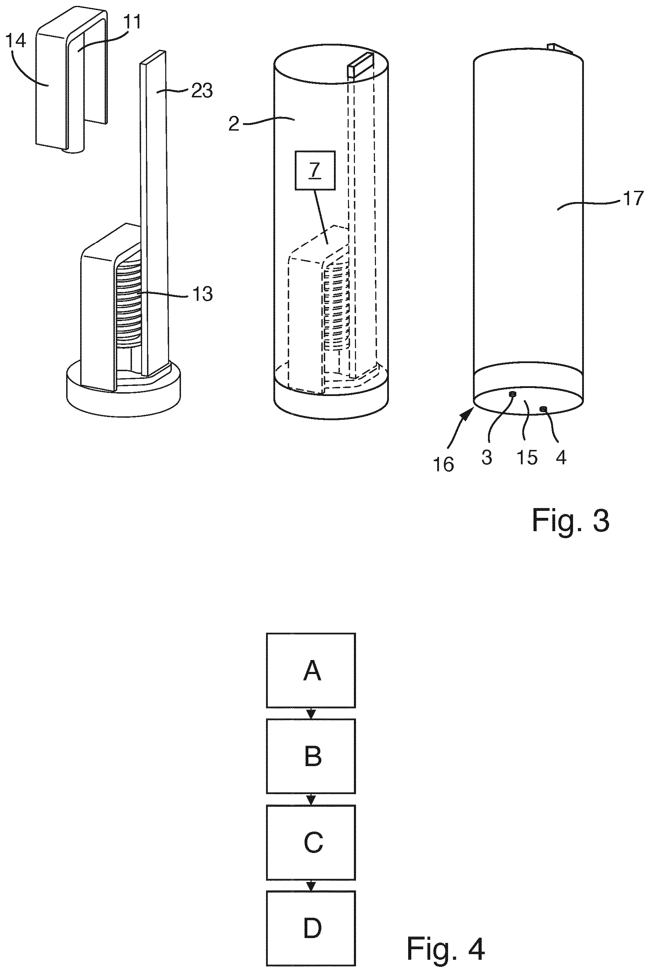

Die Fig. 3 zeigt eine Seitenansicht auf eine Ausgestaltung des Frontkörpers 15 mit einem Spulenanordnungsträgers 24 mit montierten Spulenkern 11, Feldrückführungskörper 14 und Kontaktiervorrichtung 23. Der abgebildete Frontkörper 15 weist alle wesentlichen Merkmale der Fig. 1 auf. Zusätzlich zum Spulenanordnungsträger 24 und zum Frontkörper 5 ist eine Feldrückführungskörper 14, ein Spulenkern 11, welcher sich durch die Querschnittsflächen der Spule 13 erstreckt, und eine Kontaktiervorrichtung 23 abgebildet.

Weiterhin zeigt die Fig. 3 einen Spulenkern 11 mit einem Feldrückführungskörper 14, welche zusammen die Sensorelektrode bilden. Der Spulenkern 11 ist zylindrisch ausgebildet und der Feldrückführungskörper 14 hat die Grundform eines gebogenen Streifens. Zudem weist der Feldrückführungskörper 14 eine 2-zahlige Symmetrie auf. Der Feldrückführungskörper 14 und der Spulenkern 11 können bzw. sind gemäß der abgebildeten Ausgestaltung monolithisch ausgebildet. Alternativ kann die Feldführungsanordnung aus mindestens zwei zusammengesetzten Einzelkomponenten bestehen. Die Feldführungsanordnung ist an einem Frontkörper angeordnet und erstreckt sich teilweise durch eine Öffnung eines Spulenträgers. Im Frontkörper sind zwei Messelektroden angeordnet, die über eine Kontaktiervorrichtung 23 mit einer Mess- und/oder Auswerteschaltung (nicht abgebildet) verbunden sind. Die Kontaktiervorrichtung 23 ist aus einer Platine, insbesondere aus einer flexiblen Leiterplatte gebildet, auf der eine Mess- und/oder Betriebsschaltung angeordnet sein kann.

Die Fig. 3 zeigt zudem zwei perspektivische Ansichten auf den an einem Endabschnitt 15 eines Gehäuses 2 montierten Frontkörpers 15. Das Gehäuse 2 weist eine zylindrische Grundform auf. Das Gehäuse 2 kann mit einer Vergussmasse zum Fixieren des Feldsystems vergossen sein. Der Frontkörper 15 der abgebildeten Ausgestaltung weist eine Messelektrodenanordnung mit zwei auf einem Durchmesser des Frontkörpers 15 liegenden Messelektroden 3, 4 auf. Der Frontkörper 15 ist in das Gehäuse 2 mediumsdichtend eingepresst oder mit einer Dichtung mediumsdicht angeordnet, insbesondere verpresst. Eine Gehäuseummantelung des Gehäuses ist elektrisch leitfähig ausgebildet und dient als Bezugselektrode 17. Im Gehäuse ist zudem die mit der Feldführungsanordnung elektrisch verbundene Betriebsschaltung 7 mitvergossen. Alternativ kann sie auch außerhalb des Gehäuses 2 anegordnet sein.

Die Fig. 4 zeigt einen erfindungsgemäßen Verfahrensablauf zum Ermitteln eines Füllstandes eines Mediums in einem Messrohr mit einer magnetisch-induktiven Durchflussmesssonde. In einem ersten Verfahrensschritt A wird an einer Feldführungsanordnung ein zeitlich alternierendes Erregersignal aufgebracht. Die Feldführungsanordnung umfasst mindestens einen Feldführungskörper, welcher durch mindestens einen Spulenkern und/oder mindestens einen Polschuh gebildet ist. Das Beaufschlagen mit dem Erregersignal erfolgt über eine Betriebsschaltung, die mit der Feldführungsanordnung bzw. mit mindestens einem der Feldführungskörpern elektrisch verbunden ist. In einem weiteren Verfahrensschritt B wird mittels der Betriebsschaltung ein elektrisches Antwortsignal von der Feldführungsanordnung bzw. dem Feldführungskörper empfangen. Dabei erfolgt das Beaufschlagen und Empfangen an einem einzigen Feldführungskörper. Alternativ kann an einem ersten Feldführungskörper das Erregersignal aufgebracht und an einem zweiten Feldführungskörper das Antwortsignal empfangen werden. Anhand des Antwortsignales, unter Berücksichtigung des Erregersignals, wird in einem weiteren Verfahrensschritt C eine Messkapazität oder eine von der elektrischen Kapazität zwischen Sensorelektrode und Medium abhängige Größe ermittelt, welche vom Füllstand des Mediums im Messrohr abhängt. In einem letzten Verfahrensschritt D wird dann ein Füllstand in Abhängigkeit der ermittelten Messkapazität oder der von der elektrischen Kapazität zwischen Sensorelektrode und Medium abhängigen Größe bestimmt. Alternativ kann eine Abweichung der bspw. ermittelten Messkapazität von einem Referenzwert oder einem Referenzbereich ermittelt und gegebenenfalls ein Warnhinweis ausgegeben werden oder an eine Auswerteschaltung übermittelt werden, welche dazu eingerichtet ist einen Volumendurchfluss in Abhängigkeit der induzierten Messspannung zu ermitteln.

### Bezugszeichenliste

- 1: magnetisch-induktives Durchflussmesssonde
- 2: Gehäuse
- 3: Messelektrode
- 4: Messelektrode
- 5: Feldführungsanordnung
- 6: Spulenanordnung
- 7: Betriebsschaltung
- 8: Rohrleitung
- 9: Magnetfeld
- 10: Feldführungskörper
- 11: Spulenkern
- 12: Polschuh
- 13: Spule
- 14: Feldrückführungskörper
- 15: Frontkörper
- 16: Endabschnitt
- 17: Bezugselektrode
- 18: Strömungsrichtung des Mediums
- 19: Rohrwandung
- 20: Anschlusskörper
- 21: Rohrlängsachse
- 22: Einschraubverbindung
- 23: Kontaktiervorrichtung
- 24: Spulenanordnungsträger

## Patentansprüche

1. Magnetisch-induktive Durchflussmesssonde (1) zum Einsetzen in eine von einem Medium durchströmbare Rohrleitung und zum Ermitteln einer strömungsgeschwindigkeitsabhängigen Messgröße eines fließfähigen Mediums in der Rohrleitung (8), umfassend:
- ein, insbesondere zylindrisches, Gehäuse (2), welches dazu eingerichtet ist, mit dem Medium beaufschlagt zu werden,
wobei das Gehäuse (2) einen Endabschnitt (16) aufweist, der eine zumindest teilweise elektrisch isolierend ausgebildete Wandung umfasst;
- mindestens zwei Messelektroden (3, 4) zum Bilden eines galvanischen Kontaktes mit dem Medium,
wobei die mindestens zwei Messselektroden (3, 4) in der Wandung des Gehäuses (2) angeordnet sind;
- eine Vorrichtung zum Erzeugen eines Magnetfeldes (9), welche dazu eingerichtet ist, ein den Endabschnitt (16) durchdringendes Magnetfeld zu erzeugen,
wobei die Vorrichtung zum Erzeugen des Magnetfeldes (9) im Gehäuse (2) angeordnet ist,
wobei die Vorrichtung eine Feldführungsanordnung (5) und eine Spulenanordnung (6) umfasst,
**dadurch gekennzeichnet, dass** die Feldführungsanordnung (5) als eine Sensorelektrode zur kapazitiven Bestimmung und/oder Überwachung zumindest einer Prozessgröße, insbesondere eines Füllstandes des Mediums in der Rohrleitung dient.

2. Magnetisch-induktive Durchflussmesssonde (1) nach Anspruch 1, umfassend:
- eine, insbesondere im Gehäuse (2) angeordnete, Betriebsschaltung (7),
wobei die Betriebsschaltung (7) mit der Feldführungsanordnung (5) insbesondere elektrisch verbunden ist,
wobei die Betriebsschaltung (7) dazu eingerichtet ist, die Feldführungsanordnung (5) mit einem insbesondere zeitlich alternierenden Erregersignal zu beaufschlagen, von der Feldführungsanordnung (5) ein Antwortsignal zu empfangen und zumindest aus dem Antwortsignal eine Aussage über den Füllstand des Mediums in der Rohrleitung (8) zu treffen.

3. Magnetisch-induktive Durchflussmesssonde (1) nach Anspruch 1 oder 2,
wobei die Feldführungsanordnung (5) einen Polschuh (12) umfasst.

4. Magnetisch-induktive Durchflussmesssonde (1) nach einem der vorherigen Ansprüche,
wobei die Feldführungsanordnung (5) einen Spulenkern (10) und einen Feldführungskörper (14) umfasst.

5. Magnetisch-induktive Durchflussmesssonde (1) nach Anspruch 4,
wobei die magnetisch-induktive Durchflussmesssonde (1) eine um die Wandung des Gehäuses (2) herum angeordnete ringförmige Elektrode umfasst,
wobei die Betriebsschaltung (7) dazu eingerichtet ist, das Erregersignal zwischen der ringförmigen Elektrode und dem Feldführungskörper (14) aufzuprägen.

6. Magnetisch-induktive Durchflussmesssonde (1) nach Anspruch 4 oder 5,
wobei die magnetisch-induktive Durchflussmesssonde (1) dazu geeignet ist, über einen metallischen Anschlusskörper (20) in die, insbesondere metallische, Rohrleitung (8) befestigt zu werden,
wobei die magnetisch-induktive Durchflussmesssonde (1) derart ausgebildet ist, dass sich beim Anschließen der magnetisch-induktiven Durchflussmesssonde (1) an den Anschlusskörper (20) ein elektrischer Kontakt zwischen Betriebsschaltung (7) und Anschlusskörper (20) bildet,
wobei die Betriebsschaltung (7) dazu eingerichtet ist, das Erregersignal zwischen dem Anschlusskörper (20) und dem Feldführungskörper (14) aufzuprägen.

7. Magnetisch-induktive Durchflussmesssonde (1) nach mindestens einem der Ansprüche 4 bis 6,
wobei der Feldführungskörper (14) mit einem Endabschnitt des Spulenkerns (10) verbunden ist.

8. Magnetisch-induktive Durchflussmesssonde (1) nach mindestens einem der Ansprüche 4 bis 7,
wobei zumindest ein Teilabschnitt des Feldführungskörpers (14) die elektrisch isolierende Wandung des Gehäuses (2) berührt.

9. Magnetisch-induktive Durchflussmesssonde (1) nach mindestens einem der Ansprüche 3 bis 8,
wobei die Wandung des Gehäuses (2) eine mit dem Medium beaufschlagbare Außenfläche aufweist,
wobei ein Ausschnitt des Feldführungsanordnung (5) ausschließlich durch die Wandung des Gehäuses (2) von der Außenfläche beabstandet ist.

10. Magnetisch-induktive Durchflussmesssonde (1) nach mindestens einem der Ansprüche 3 bis 9,
wobei die Betriebsschaltung (7) mit der Spulenanordnung (6) verbunden ist und dazu eingerichtet ist ein getaktetes Magnetfeld mit Anregungsphasen und mit sich jeweils zwischen zwei Anregungsphasen befindliche Ruhephasen, in denen im Wesentlichen kein Spulenstrom fließt zu erzeugen,
wobei in einer der Ruhephasen das Erregersignal erzeugt und das entsprechende Antwortsignal empfangen wird.

11. Magnetisch-induktive Durchflussmesssonde (1) nach mindestens einem der vorherigen Ansprüche,
wobei die Betriebsschaltung (7) dazu eingerichtet ist, einen Messwert einer elektrischen Kapazität der Feldführungsanordnung (5) zum Medium zumindest anhand des Antwortsignales zu bestimmen und anhand einer Abweichung der ermittelten Messwerte von einer Referenzkapazität eine Information bezüglich des Füllstandes zu ermitteln.

12. Verfahren zum Ermitteln eines Füllstandes in einer Rohrleitung (8) mit der magnetisch-induktiven Durchflussmesssonde (1) nach Anspruch 5, umfassend die Verfahrensschritte:
- Beaufschlagen eines Feldführungskörpers (10) mit einem elektrischen, insbesondere zeitlich alternierenden Erregersignal,
- Empfangen eines elektrischen Empfangssignals von dem Feldführungskörper (10),
- Ermitteln einer Messkapazität des Feldführungskörpers (10) zumindest anhand des Empfangssignals, und
- Bestimmen eines Füllstandes in der Rohrleitung (8) anhand der Messkapazität.

## Claims

1. **Magnetic-inductive flow measurement probe** (1) for insertion into a pipeline through which a medium flows and for determining a flow velocity-dependent measurement variable of a flowable medium in the pipeline (8), comprising:
• a housing (2), in particular cylindrical, which is configured to be exposed to the medium, wherein the housing (2) has an end section (16) comprising a wall that is at least partially electrically insulating;
• at least two measuring electrodes (3, 4) for forming a galvanic contact with the medium, wherein the at least two measuring electrodes (3, 4) are arranged in the wall of the housing (2);
• a device for generating a magnetic field (9), which is configured to generate a magnetic field penetrating the end section (16),
wherein the device for generating the magnetic field (9) is arranged in the housing (2), and wherein the device comprises a field guidance arrangement (5) and a coil arrangement (6),
**characterized in that** the field guidance arrangement (5) serves as a sensor electrode for capacitive determination and/or monitoring of at least one process variable, in particular the fill level of the medium in the pipeline.

2. **Magnetic-inductive flow measurement probe** (1) according to claim 1, comprising:
• an operating circuit (7), in particular arranged in the housing (2),
wherein the operating circuit (7) is electrically connected to the field guidance arrangement (5),
and is configured to apply an excitation signal, in particular a time-varying one, to the field guidance arrangement (5), receive a response signal from the field guidance arrangement (5), and derive at least from the response signal an indication of the fill level of the medium in the pipeline (8).

3. **Magnetic-inductive flow measurement probe** (1) according to claim 1 or 2,
wherein the field guidance arrangement (5) comprises a pole shoe (12).

4. **Magnetic-inductive flow measurement probe** (1) according to any of the preceding claims,
wherein the field guidance arrangement (5) comprises a coil core (10) and a field guidance body (14).

5. **Magnetic-inductive flow measurement probe** (1) according to claim 4,
wherein the probe (1) comprises a ring-shaped electrode arranged around the wall of the housing (2),
and the operating circuit (7) is configured to apply the excitation signal between the ring-shaped electrode and the field guidance body (14).

6. **Magnetic-inductive flow measurement probe** (1) according to claim 4 or 5,
wherein the probe (1) is adapted to be mounted into the pipeline (8), in particular a metallic one, via a metallic connection body (20),
and is designed such that, upon connection to the connection body (20), an electrical contact is formed between the operating circuit (7) and the connection body (20),
and the operating circuit (7) is configured to apply the excitation signal between the connection body (20) and the field guidance body (14).

7. **Magnetic-inductive flow measurement probe** (1) according to at least one of claims 4 to 6,
wherein the field guidance body (14) is connected to an end section of the coil core (10).

8. **Magnetic-inductive flow measurement probe** (1) according to at least one of claims 4 to 7,
wherein at least a partial section of the field guidance body (14) contacts the electrically insulating wall of the housing (2).

9. **Magnetic-inductive flow measurement probe** (1) according to at least one of claims 3 to 8,
wherein the wall of the housing (2) has an outer surface exposed to the medium,
and a section of the field guidance arrangement (5) is spaced from the outer surface solely by the wall of the housing (2).

10. **Magnetic-inductive flow measurement probe** (1) according to at least one of claims 3 to 9,
wherein the operating circuit (7) is connected to the coil arrangement (6) and configured to generate a pulsed magnetic field with excitation phases and intervening idle phases in which essentially no coil current flows,
and wherein the excitation signal is generated and the corresponding response signal received during one of the idle phases.

11. **Magnetic-inductive flow measurement probe** (1) according to at least one of the preceding claims,
wherein the operating circuit (7) is configured to determine a measured value of an electrical capacitance of the field guidance arrangement (5) to the medium at least based on the response signal, and to determine information regarding the fill level based on a deviation of the measured values from a reference capacitance.

12. **Method for determining a fill level in a pipeline** (8) using the magnetic-inductive flow measurement probe (1) according to claim 5, comprising the steps of:
• applying an electrical, in particular time-varying, excitation signal to a field guidance body (10),
• receiving an electrical response signal from the field guidance body (10),
• determining a measurement capacitance of the field guidance body (10) at least based on the response signal, and
• determining a fill level in the pipeline (8) based on the measurement capacitance.

## Revendications

1. **Sonde de mesure de débit électromagnétique** (1) destinée à être insérée dans une conduite traversée par un fluide et à déterminer une grandeur de mesure dépendante de la vitesse d'écoulement d'un fluide dans la conduite (8), comprenant :
• un boîtier (2), notamment cylindrique, conçu pour être exposé au fluide,
le boîtier (2) présentant une section terminale (16) comprenant une paroi au moins partiellement isolante électriquement ;
• au moins deux électrodes de mesure (3, 4) destinées à établir un contact galvanique avec le fluide,
lesdites électrodes étant disposées dans la paroi du boîtier (2) ;
• un dispositif de génération de champ magnétique (9), conçu pour générer un champ magnétique traversant la section terminale (16),
le dispositif de génération de champ magnétique (9) étant disposé dans le boîtier (2), et comprenant un agencement de guidage de champ (5) et un agencement de bobine (6),
**caractérisé en ce que** l'agencement de guidage de champ (5) sert d'électrode capteur pour la détermination et/ou la surveillance capacitive d'au moins une grandeur de procédé, notamment du niveau de remplissage du fluide dans la conduite.

2. **Sonde de mesure de débit électromagnétique** (1) selon la revendication 1, comprenant :
• un circuit de commande (7), notamment disposé dans le boîtier (2),
le circuit étant électriquement connecté à l'agencement de guidage de champ (5),
et conçu pour appliquer un signal d'excitation, notamment alternatif dans le temps, à l'agencement de guidage de champ (5), recevoir un signal de réponse de celui-ci, et en déduire une information sur le niveau de remplissage du fluide dans la conduite (8).

3. **Sonde de mesure de débit électromagnétique** (1) selon la revendication 1 ou 2, dans laquelle l'agencement de guidage de champ (5) comprend une pièce polaire (12).

4. **Sonde de mesure de débit électromagnétique** (1) selon l'une des revendications précédentes,
dans laquelle l'agencement de guidage de champ (5) comprend un noyau de bobine (10) et un corps de guidage de champ (14).

5. **Sonde de mesure de débit électromagnétique** (1) selon la revendication 4, comprenant une électrode annulaire disposée autour de la paroi du boîtier (2), le circuit de commande (7) étant conçu pour appliquer le signal d'excitation entre l'électrode annulaire et le corps de guidage de champ (14).

6. **Sonde de mesure de débit électromagnétique** (1) selon la revendication 4 ou 5, conçue pour être fixée dans la conduite (8), notamment métallique, via un corps de raccord métallique (20),
et conçue de manière à ce qu'un contact électrique soit établi entre le circuit de commande (7) et le corps de raccord (20) lors du raccordement,
le circuit de commande (7) étant conçu pour appliquer le signal d'excitation entre le corps de raccord (20) et le corps de guidage de champ (14).

7. **Sonde de mesure de débit électromagnétique** (1) selon au moins une des revendications 4 à 6,
dans laquelle le corps de guidage de champ (14) est relié à une section terminale du noyau de bobine (10).

8. **Sonde de mesure de débit électromagnétique** (1) selon au moins une des revendications 4 à 7,
dans laquelle au moins une partie du corps de guidage de champ (14) est en contact avec la paroi isolante du boîtier (2).

9. **Sonde de mesure de débit électromagnétique** (1) selon au moins une des revendications 3 à 8,
dans laquelle la paroi du boîtier (2) présente une surface extérieure exposée au fluide, et une section de l'agencement de guidage de champ (5) est espacée de cette surface uniquement par la paroi du boîtier (2).

10. **Sonde de mesure de débit électromagnétique** (1) selon au moins une des revendications 3 à 9,
dans laquelle le circuit de commande (7) est connecté à l'agencement de bobine (6) et conçu pour générer un champ magnétique pulsé avec des phases d'excitation et des phases de repos intermédiaires pendant lesquelles aucun courant de bobine ne circule, le signal d'excitation étant généré et le signal de réponse correspondant étant reçu pendant une phase de repos.

11. **Sonde de mesure de débit électromagnétique** (1) selon au moins une des revendications précédentes,
dans laquelle le circuit de commande (7) est conçu pour déterminer une valeur de mesure de la capacité électrique de l'agencement de guidage de champ (5) par rapport au fluide, au moins sur la base du signal de réponse, et pour déterminer une information relative au niveau de remplissage à partir d'une déviation par rapport à une capacité de référence.

12. **Procédé de détermination d'un niveau de remplissage dans une conduite** (8) à l'aide de la sonde de mesure de débit électromagnétique (1) selon la revendication 5, comprenant les étapes suivantes :
• application d'un signal d'excitation électrique, notamment alternatif dans le temps, à un corps de guidage de champ (10),
• réception d'un signal électrique de réponse provenant du corps de guidage de champ (10),
• détermination d'une capacité de mesure du corps de guidage de champ (10) au moins sur la base du signal de réponse, et
• détermination du niveau de remplissage dans la conduite (8) sur la base de la capacité de mesure.
